# EUROPÄISCHE PATENTSCHRIFT

(11) **EP 0 414 280 B1**
(45) Veröffentlichungstag und Bekanntmachung des Hinweises auf die Patenterteilung: **28.09.1994**
(21) Anmeldenummer: 90118250.1
(22) Anmeldetag: 23.03.1988
(51) Int. Cl.: B23D 61/18, F16G 11/08

(54) **Sägeseilverschluss**
Saw wire fastening
Dispositif de jonction pour scie à fil

(30) Priorität: 24.03.1987 DE 3709607; 13.06.1987 DE 3719855; 22.02.1988 DE 3805405
(43) Veröffentlichungstag der Anmeldung: 27.02.1991
(62) Teilanmeldung aus: 88902415.4
(73) Patentinhaber: MVZ MASCHINENBAU UND VERZAHNUNGSTECHNIK, JOHANNES FALKENSTEIN, D-88427 Bad Schussenried (DE)
(72) Erfinder: Falkenstein, Johannes, D-7953 Bad Schussenried (DE)
(74) Vertreter: Patentanwälte Eisele, Otten & Roth

(56) Entgegenhaltungen:
- DE-A- 1 949 194
- DE-A- 2 014 437
- FR-A- 2 249 754
- GB-A- 15 752
- GB-A- 759 505

## Beschreibung

Die Erfindung betrifft ein Sägewerkzeug zur Verwendung an einer Bandsägemaschine o. dgl. nach dem Oberbegriff des Anspruchs 1.

Ein Sägewerkzeug zur Verwendung an einer Bandsägemaschine mit Schneidelementhülsen ist aus der DE 24 51 153 C2 bekannt geworden.

Bei der Bearbeitung von Konturen von Grabsteinen o. dgl. erfolgt das Einbringen einer Ausnehmung bzw. eines Lochs in eine Steinplatte z. B. dadurch, daß man längs der Lochkontur eine Bohrung neben die andere setzt und das Innenteil damit herausbricht. Auch mittels Fingerfräser kann die Lochkontur durch einen zeitaufwendigen Bearbeitungsvorgang ausgefräst werden. Diese Bearbeitungsmethode ist jedoch zeitaufwendig und im Ergebnis unbefriedigend.

Die Verwendung von endlosen Sägeseilen an Bandsägemaschinen zur Bearbeitung von Konturen von Grabsteinen o. dgl. ist ebenfalls bekannt (US-PS 15 752). Um Innenkonturen bearbeiten zu können, führt man das mittels eines Seilverschlusses geöffnete Seil durch ein Loch und verschließt dieses mittels des Verschlusses. Dabei geschieht das Verschließen der beiden Gewindeenden dadurch, daß man entweder die beiden Enden mit gegenläufigen Gewinde, d. h. Rechtsgewinde und Linksgewinde mit etwa gleich langen Gewindeabschnitten versieht. Bei der Drehung einer zusätzlichen Gewindehülse ziehen sich die beiden Enden des Seils nach Art eines Spannschlosses zusammen. Dabei wird die Verschlußkraft durch den Anpreßdruck der beiden Seilenden gegeneinander erzeugt. Diese Verschlußart hat zwar den Vorteil, daß keine Verdrillung eines Seilendes beim Zusammenfügen der Seilenden erfolgt. Das bloße Aneinanderdrücken der Seilenden als Verschlußkraft kann jedoch keine befriedigende Verschlußmechanik bilden. Außerdem laßt sich ein derartiger Verschluß nicht ohne weiteres gegen ungewolltes Öffnen sichern, da Durchgangsstifte oder Bolzen vermieden werden müssen, die das Seil selbst durchstoßen und dieses damit schwächen.

Eine weitere bekannte Methode zur Verbindung der beiden Seilenden eines Sägewerkzeugs besteht darin, daß die beiden Enden mit jeweils einem gleich langen Rechtsgewinde oder gleich langem Linksgewinde versehen sind und diese mittels der separaten Gewindehülse verbunden werden. Bei dieser Methode ist ein Verdrillen der Seilenden unumgänglich, was automatisch Rückstellkräfte des verdrillten Seiles mit sich bringt, die ein Öffnen des Verschlusses bewirken können. Im übrigen wird auch bei dieser Verschlußart die Verschlußkraft durch das Aneinanderpressen der Seilenden innerhalb der Verschlußhülse bestimmt.

Sägewerkzeuge mit einem Drahtseil als Kern haben den Vorteil, daß sie in ihrem Durchmesser sehr klein gehalten werden können und damit zur Bearbeitung feinster Konturen geeignet sind. Um eine gewisse Flexibilität zu behalten, darf das Seil jedoch nicht durchgehend mit einer z. B. galvanisch aufgebrachten Diamantbeschichtung versehen sein, da dieses bei einer Umlenkung bei einer Bandsägemaschine, d. h. einer stetigen Beanspruchung auf Biegung zerstört werden würde. Deshalb weisen derartige Sägeseile eine in Abständen angeordnete Diamantbeschichtung auf, die im allgemeinen durch auf das Seil aufgeschobene, diamantbeschichtete Schneidhülsen oder Schneidperlen erhalten wird (DE 24 51 153 C2). Dabei können die Schneidhülsen oder Schneidperlen durch Aufquetschen, d. h. durch mechanische Verformung auf das Drahtseil, aufgeklemmt werden, was jedoch zu einer Beschädigung des Drahtseiles und damit zu einem vorzeitigen Verschleiß bzw. Bruch des Seiles führen kann. Der Zwischenraum zwischen den Schneidperlen wird durch Abstandshülsen oder einzelnen Abstützfedern ausgefüllt. Gemäß der DE 24 51 153 C2 können die Schneidhülsen auch in einer um das Seil angeordneten Kunststoffummantelung eingebettet sein.

Der Erfindung liegt die Aufgabe zugrunde, ein für die Bearbeitung von Konturen in gesteinsartigen Materialien verbessertes Werkzeug zur Verfügung zu stellen, wobei insbesondere ein außerordentlich sicherer Verschluß zur Verbindung der Enden des Seils vorgesehen ist und wobei das Sägeseil eine hohe Lebensdauer, einen ruhigen, vibrationsarmen Lauf und eine einfache Möglichkeit zur Reparatur aufweisen soll.

Diese Aufgabe wird ausgehend von einem Sägewerkzeug der einleitend bezeichneten Art erfindungsgemäß durch die kennzeichnenden Merkmale des Anspruchs 1 gelöst. Durch die in den Unteransprüchen aufgeführten Maßnahmen ist eine zweckmäßige und vorteilhafte Weiterbildung des im Hauptanspruch angegebenen Sägewerkzeugs möglich.

Das erfindungsgemäße Sägeseil hat den Vorteil, daß eine außerordentlich sichere Verbindung der Seilenden geschaffen wird. Dies beruht darauf, daß die auf die Seilenden aufgequetschten Gewindehülsen unterschiedlich lange jedoch gleichdrehende Gewindegänge aufweisen und daß die separat aufgedrehten Gewindehülse gegen den Endanschlag der aufgequetschten Gewindehülse mit dem kürzeren Gewinde verspannt wird. Die Seilenden werden demnach nicht durch ein Gegeneinanderpressen der relativ weichen Seilenden, sondern durch den Endanschlag von Gewindegängen zusammengehalten. Dabei tritt keinerlei Verdrillung eines Seilendes auf so daß keine Rückstellkräfte auf den Verschluß einwirken.

Gemäß der vorteilhaften Weiterbildung der Erfindung kann der Verschluß zusätzlich noch dadurch gesichert werden, daß ein Sicherungselement, insbesondere ein Stift, Bolzen, Draht o. dgl. durch die separate Gewindehülse und zwar im Bereich zwischen den Enden des Seils eingebracht ist. Ein Aufdrehen der separaten Gewindehülse oder Verschlußhülse ist dadurch nicht mehr möglich, da der Stift eine axiale Bewegung der separaten Gewindehülse verhindert. Anstelle eines Sicherungsstiftes können die beiden zusammenzufügenden Endstücke des Seils jeweils eine Nut und eine Feder aufweisen, die stirnseitig an den Endstücken angebracht sind und ineinandergefügt als Verdrehsicherung der beiden Teile dienen.

Eine Weiterbildung der Erfindung sieht vor, daß auch die separate Gewindehülse bzw. Verschlußhülse diamantbeschichtet ist, um als zusätzliches Schneidelement zu dienen.

Vorteilhaft ist weiterhin, daß der Zwischenraum zwischen den einzelnen Schneidhülsen mit einem Kunststoffüberzug versehen ist. Hierdurch brauchen die Schneidelemente nicht zwingend als Quetschhülsen ausgebildet werden, da die Lage der Hülsen durch den Kunststoffüberzug fixiert wird. Durch den Quetschvorgang wird das innere Sägeseil ggf. verletzt, so daß dieser Vorgang nur zur Fixierung der Hülsen nicht jedoch zu dessen Arretierung verwendet werden sollte.

In Weiterbildung der Erfindung wird der Kunststoffüberzug über das komplette Sägewerkzeug gezogen, so daß es zunächst auch die Schneidelemente mitumfaßt. So sind die empfindlichen Diamantbeläge beim Transport geschützt und können auch keine Verletzungen hervorrufen. Erst im Schneideinsatz wird die sehr dünne Kunststoffschicht abgerieben und der Diamantbelag auf den Schneidhülsen kommt zum Vorschein.

Ein vorteilhaftes und zweckmäßiges Ausführungsbeispiel der Erfindung ist in der Zeichnung dargestellt und in der nachfolgenden Beschreibung näher erläutert. Es zeigen
- Fig. 1: eine schematische Darstellung des Sägewerkzeugs mit Verschluß und aufgebrachten Schneidhülsen,
- Fig. 2: ein alternatives Ausführungsbeispiel mit Drahtspirale sowie mit Nut- und Federverdrehsicherung,
- Fig. 3: eine Darstellung gemäß Fig. 2 in zusammengeschraubtem Zustand und
- Fig. 4: eine Darstellung nach Fig. 3 mit zusätzlichem angedeuteten Kunststoffüberzug.

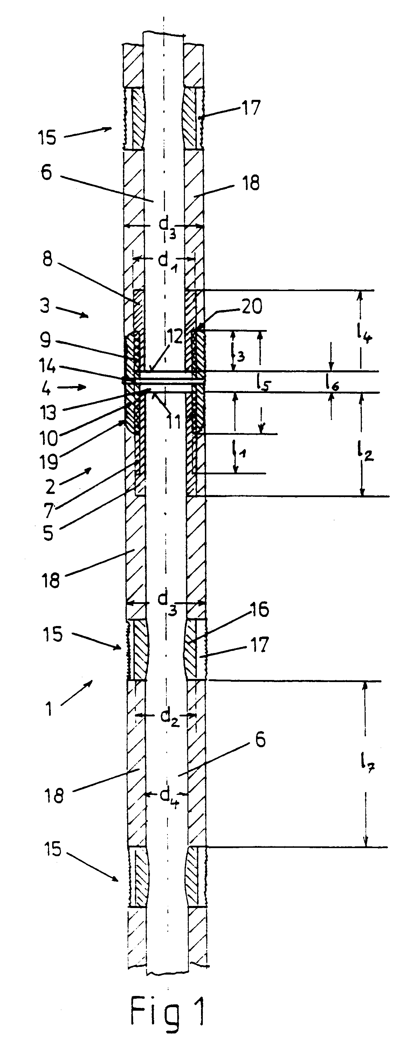

Generell erstreckt sich die Erfindung auf die Verwendung des erfindungsgemäßen Sägeseils an einer nicht näher dargestellten Bandsägemaschine zur Herstellung von Konturen, insbesondere Innenkonturen in Gesteinsmaterialien, wobei das Sägeseil über einen Verschluß zu öffnen ist. Die spezielle Verschlußmechanik ist anhand von Fig. 1 nachfolgend beschrieben.

Das erfindungsgemäße Sägeseil (1) weist zwei Seilenden (2, 3) auf, die mittels eines Verschlusses (4) miteinander zur Bildung eines ringförmigen, endlosen Seils verbunden sind. Dieses Seil kann dann auf die angepaßten Scheiben einer nicht näher dargestellten Bandsägemaschine mit Antriebsrolle und Umlenkrolle aufgelegt werden.

Zur Bildung des Verschlusses (4) weist das in Fig. 1 dargestellte untere Seilende (2) - im weiteren erstes Seilende (2) genannt - eine Gewindehülse (5) auf, die auf das eigentliche Seil (6) fest aufgequetscht oder aufgelötet ist. Die Gewindehülse (5) weist ein längeres Gewinde (7) mit der Länge l₁ auf. Die Gesamtlänge der Gewindehülse (5) ist mit l₂ bezeichnet.

Gleichermaßen weist das in Fig. 1 dargestellte obere Seilende (3) - im weiteren zweites Seilende genannt - eine Gewindehülse (8) auf, die ebenfalls fest auf das Seil (6) aufgebracht ist. Die Gewindehülse (8) weist ein kürzeres Gewinde (9) auf, dessen Länge l₃ etwa halb so lang ist wie die Länge l₁ des Gewindes (7) der Gewindehülse (5). Die Gesamtlänge der Gewindehülse (8) ist mit l₄ angegeben. Der äußere Durchmesser d₁ der Gewindehülsen (5 und 8) ist in Fig. 1 dargestellt.

Die beiden Seilenden (2, 3) mit ihren Gewindehülsen (5, 8) werden mittels der separaten Gewindehülse (10) - im weiteren Verschlußhülse genannt - verbunden. Dabei sind alle Gewinde der Teile (5, 8, 10) als gleichdrehende Gewinde, z. B. Linksgewinde oder Rechtsgewinde ausgebildet. Die Länge der Verschlußhülse (10) ist mit l₅ angegeben. Sie ist etwas länger als die Länge l₁ des Gewindes (7) der ersten Gewindehülse (5).

Das äußerste Ende (11) des ersten Seilendes (2) sowie das äußerste Seilende (12) des zweiten Seilendes (3) weisen im zusammengeschraubten Zustand einen Abstand von l₆ auf.

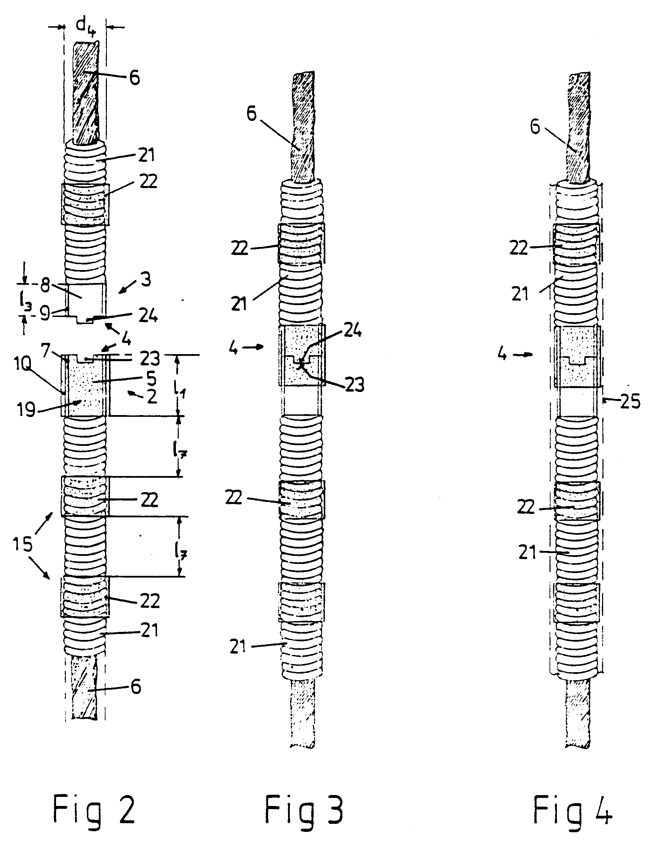

Durch diesen, durch den Abstand l₅ gebildeten Zwischenraum (13) wird ein Sicherungselement (14), z.B. ein Stift, Bolzen, Draht, Dorn o. dgl. geführt, der ein ungewolltes Öffnen des Verschlusses (4) verhindert. Anstelle dieses Sicherungselementes (14) kann gemäß der Darstellung nach Fig. 2 eine Verdrehsicherung der beiden Seilenden (2, 3) dadurch herbeigeführt werden, daß das untere Seilende (2) eine Nut (23) und das obere Seilende (3) eine Feder (24) aufweist, die ineinandergeschoben eine verdrehgesicherte Verbindung wie in Fig. 3 dargestellt, bilden. Im übrigen ist der Verschluß in der Darstellung nach Fig. 2 und 3 gleich aufgebaut wie der Verschluß nach Fig. 1. Gleiche Teile sind mit gleichen Bezugszeichen versehen.

Auf dem Seil (6) (Fig. 1) sind weiterhin in gleichbleibenden Abständen l₇ diamantbeschichtete Schneidelemente (15) aufgebracht, die als Schneidhülsen (16) fest am Seil (6) arretiert sind. Der Diamantbelag (17) wird dabei im allgemeinen erst nachträglich, d. h. nachdem die Schneidhülsen (16) auf dem Seil (6) arretiert sind, aufgebracht.

Der Zwischenraum l₇ zwischen jeweils zwei Schneidelementen (15) sowie der Zwischenraum zwischen dem Verschluß (4) und den beiden benachbarten Schneidelementen (15) wird durch einen Kunststoffschlauch (18) oder einen Kunststoffüberzug (18) ausgefüllt. Durch den Kunststoffüberzug (18) wird die Lage der Schneidhülsen fixiert, so daß sich ein starkes Aufquetschen der Schneidhülsen erübrigt. Der äußere Durchmesser des Kunststoffschlauchs (18) bzw. des Kunststoffüberzugs (18) sowie der Schneidelemente (15) und der Verschlußhülse (10) ist etwa gleich groß bemessen und in Fig. 1 mit d₃ gekennzeichnet. Hierdurch wird ein sehr vibrationsarmer Lauf ohne Nachschwingungen des Sägeseils erzeugt, da kein ständiges Einhaken der Schneidelemente erfolgen kann. Der Verschlußmechanismus des Verschlusses (4) arbeitet wie folgt:

Die Verschlußhülse (10) wird zunächst auf das längere Gewinde (7) der ersten Gewindehülse (5) des ersten (in Fig. 1 unteren) Seilendes (2) aufgeschraubt. Dabei ist die Länge l₅ des Gewindes der Verschlußhülse (10) derart bemessen, daß sie zumindest größer ist als die Länge l₁ des Gewindes (7) der ersten Gewindehülse (5). Vorzugsweise wird die Länge l₅ der Verschlußhülse (10) derart bemessen, daß sie die Länge l₁ des ersten Gewindes (7) plus der Länge l₆ des Zwischenraums (13) einnimmt. Hat man die Verschlußhülse dann voll auf das Gewinde (7) aufgedreht, so steht die Verschlußhülse (10) mit der Länge l₆, d. h. der Länge des Zwischenraums (13) über das äußerste Ende (11) des ersten Seilendes (2) über. Dieser Zwischenraum l₆ kann bei der Ausführung nach Fig. 2 bzw. 3 entfallen, da hier die Seilenden (2, 3) aneinanderstoßen.

Sodann setzt man das zweite Ende (3) (oberes Seilende) gegen das offene Ende der Verschlußhülse (10) und dreht diese wieder von dem Gewinde (7) herunter unter gleichzeitigem Aufdrehen auf das Gewinde (9) der zweiten Gewindehülse (8). Bei diesem Vorgang bleibt der Zwischenraum (13) in Fig. 1 ständig erhalten.

Das Gewinde (9) der zweiten Gewindehülse (8) weist eine Länge l₃ auf, die etwa halb so groß ist als die Länge l₁ des ersten Gewindes (7). Ist nun die Verschlußhülse (10) auf das zweite Gewinde (9) aufgeschraubt, so belegen die beiden Gewinde (7 und 9) gleich viel Gewindegänge der Verschlußhülse (10). Die Verschlußhülse ist damit genau symmetrisch auf den beiden Seilenden (2, 3) unter Bildung eines Zwischenraums (13) angeordnet. Die Verschlußkraft des Verschlusses (4) wird durch den Anschlag der Verschlußhülse (10) am Ende des Gewindes (9) der zweiten Gewindehülse (8) bewirkt. Hier kann ggf. ein separater Absatz (20) als Anschlag am Gewindeende vorgesehen sein.

Zur Sicherung des Verschlusses (4) wird dann noch das Sicherungselement (14) in den Zwischenraum (13) eingebracht. Dies kann z. B. ein diagonal durchgreifender Stift sein. Hierdurch kann die Verschlußhülse (10) sich maximal bis zum Anschlag des Sicherungselements (14) an der obersten Fläche (11) des ersten, unteren Seilendes (2) verdrehen. Das Sicherungselement (14) ist demnach eine formschlüssige Blockiereinrichtung.

Bei einem Ausführungsbeispiel kann das Seil (6) einen Durchmesser von d₄ = 3 mm, die Quetschhülse (16) einen Durchmesser von d₂ = 4 mm und der Diamantbelag einen äußeren Durchmesser von d₃ = 5 mm aufweisen, was zu einer Schnittbreite von nur 5 mm führt. Gleichzeitig weist der Kunststoffüberzug (18) ebenfalls einen Außendurchmesser von 5 mm auf, was auch dem äußeren Durchmesser der Verschlußhülse (10) entspricht.

Die Verschlußhülse (10) kann an ihrer Oberfläche zusätzlich mit einer Diamantschicht (19) belegt sein, um ebenfalls als Schneidelement zu dienen.

Bei dem Verschluß (4) in Fig. 2 und 3 erübrigt sich demnach ein zusätzlicher Sicherungsstift (14), da die Verdrehsicherung durch die Längsnut (23) mit Feder (24) an den beiden Seilenden (2, 3) bewerkstelligt wird. Die Nut und Federverbindung (22, 23) sind demnach nicht kreiszylindrisch sondern rechteckig oder quadratisch im Querschnitt ausgebildet.

Bei der Ausführungsform des Sägewerkzeug nach Fig. 2 und 3 wird auf das Seil (6) eine Drahtspirale (21) aufgezogen, die diamantbeschichtete Segmente (22) anstelle der in Fig. 1 dargestellten separaten Schneidhülsen (15) aufweist. Die auf die Drahtspirale (21) z. B. galvanisch aufgebrachte Diamantbeschichtung weist lediglich eine Dicke von wenigen zehntel Millimeter auf, d. h. das Sägewerkzeug weist wiederum einen nahezu gleichbleibenden Außendurchmesser über die gesamte Länge auf. Dies führt zu dem gewünschten vibrationsarmen Umlauf. Die Drahtspirale (21) ist auf der gesamten Länge des Drahtseils (6) aufgezogen, so daß in Fig. 2 und 3 das innere Drahtseil komplett umschlossen ist. Im Bereich des Seilverschlusses ist die Drahtspirale in den Verschluß eingeklemmt, eingelötet oder auf sonstiger geeigneter Weise befestigt.

Die Darstellung in Fig. 2 zeigt den geöffneten, in Fig. 3 den geschlossenen Zustand des Verschlusses. In der Darstellung in Fig. 4 ist das komplette Seil noch mit einem zusätzlichen Kunststoffüberzug (25) versehen, der als Transportschutz vorgesehen ist. Der Diamantbelag (22) schleift sich im Betrieb nach wenigen Umdrehungen frei, so daß der Kunststoffüberzug in diesem Bereich sofort entfernt ist.

Die Drahtspirale (21) wird über das Seil (6) aufgezogen und kann beispielsweise bei einem Bruch des Seils (6) ohne weiteres wiederverwendet werden. Hierzu wird das gebrochene Seil (6) aus der Drahtspirale (21) herausgezogen und durch ein neues Drahtseil (6) ersetzt. Die Verwendung eines Seils (6) mit übergezogener Drahtspirale (21) hat zur Folge, daß das Seil (6) keinerlei Schwächung durch aufgequetschte Schneidhülsen erfährt, d. h. es werden jegliche Kerbspannungen und damit Bruchgefahr vermieden. Vorteilhaft ist weiterhin, daß das Sägewerkzeug noch exakter und vibrationsärmer umläuft und daß ein nahezu nahtloser Obergang des dünnen Diamantbelags (22) zur Drahtspirale (21) erfolgt. Die Flexibilität des Sägewerkzeugs bleibt in vollem Umfang erhalten, da die Spirale nur segmentiert beschichtet ist. Die Spirale kann als Meterware sehr kostengünstig bereitgestellt werden und sie bestimmt gleichzeitig den Abstand l₇ der einzelnen Schneidsegmente.

Wie in Fig. 1, so kann auch in der Darstellung nach Fig. 2 und 3 der Verschluß ebenfalls mit einem Diamantüberzug (19) versehen werden. Im übrigen muß der Verschluß (4) in seinem Außendurchmesser sehr klein gehalten werden, um nahezu den Außendurchmesser (d₄) der Drahtspirale (21) zuzüglich der aufgebrachten Diamantschicht einzunehmen.

## Patentansprüche

1. Sägewerkzeug zur Verwendung an einer Bandsägemaschine o. dgl. zur Bearbeitung von gesteinsartigen Materialien, bestehend aus einem Sägeseil (1), dessen Verschluß (4) durch zwei Gewinde (7, 9) an den Seilenden (2, 3) und einer darauf angeordneten Gewindehülse (10) gebildet ist, mit in Abständen zueinander angeordneten diamant-, hartmetall- oder keramik-beschichteten Schneid- bzw. Schleifelementen, dadurch gekennzeichnet, daß an dem Sägeseil (1) ein längeres (7) und ein kürzeres (9) jeweils gleichläufiges Gewinde (7, 9) zur Aufnahme der Gewinde- bzw. Verschlußhülse (10) vorgesehen sind, wobei die separate Hülse (10) des Verschlusses (4) nahezu mit seiner gesamten Länge (l₅) auf das Gewinde (7) des ersten Seilendes (2) aufschraubbar ist und das Verschließen der beiden Seilenden (2, 3) durch Zurückdrehen der Verschlußhülse (10) vom ersten Gewinde (7) des ersten Seilendes (2) unter gleichzeitigem Aufschrauben auf das zweite Gewinde (9) des zweiten Seilendes (3) erfolgt.

2. Sägewerkzeug nach Anspruch 1, dadurch gekennzeichnet, daß das Gewinde (9) des zweiten Seilendes (3) eine Länge (l₃) aufweist, die etwa halb so lang ist, wie die Länge (l₁) des ersten Gewindes (7) des ersten Seilendes (2).

3. Sägewerkzeug nach Anspruch 1 oder 2, dadurch gekennzeichnet, daß zur Sicherung des Verschlusses (4) ein Sicherungselement (14) wie Stift, Draht, Bolzen, Dorn o. dgl. durch die Gewindehülse (10) geführt ist, wobei das Sicherungselement (14) zwischen den Enden (11, 12) des Seils (6) zu liegen kommt, oder daß die beiden zusammenfügbaren Endstücke (2, 3) eine ineinandergreifende Nut-Feder-Verbindung (23, 24) als Verdrehsicherung aufweisen.

4. Sägewerkzeug nach Anspruch 1, 2 oder 3, dadurch gekennzeichnet, daß die Gewindehülse (10) selbst als Schneidelement ausgebildet ist und eine Diamantbeschichtung (19) o. dgl. aufweist.

5. Sägewerkzeug nach einem oder mehreren der vorhergehenden Ansprüche 1 bis 5, dadurch gekennzeichnet, daß die in Abständen l₇ auf dem Seil (6) angeordneten diamantbeschichteten Schneidelemente (15) fest am Seil (6) in ihrer Lage fixiert sind, daß die Gewindehülse (10) und die Schneidelemente (15) etwa den gleichen Außendurchmesser d₃ aufweisen und daß zwischen den Schneidelementen (15) bzw. den Schneidelementen (15) und der Gewindehülse (10) ein Kunststoffschlauch oder -überzug (18) vorgesehen ist, der etwa den gleichen Außendurchmesser d₃ aufweist wie die Schneidelmente (15) bzw. die Gewindehülse (10).

6. Sägewerkzeug nach Anspruch 5, dadurch gekennzeichnet, daß der Kunststoffüberzug (18) die Schneidelemente (15) bzw. das gesamte Seil (6) zunächst komplett umschließt, wobei der Kunststoffüberzug (18) im Bereich der Schneidelemente (15, 22) im Betrieb abtragbar ist.

7. Sägewerkzeug nach Anspruch 1, dadurch gekennzeichnet, daß die Schneid- oder Schleifelemente bzw. -segmente (15, 22) als separate, auf dem Seil (6) angeordnete Schneidhülsen (15, 16) oder als Schneid- bzw. Schleifsegmente (22) ausgebildet sind, die auf einer das Seil (6) über die ganze Länge überziehenden Spirale (21) angeordnet sind.

8. Sägewerkzeug nach Anspruch 1 oder 7, dadurch gekennzeichnet, daß die das Seil (6) komplett umgebende Drahtspirale (21) in Abständen (l₇) zueinander angeordnete, diamantbeschichtete Segmente (22) aufweist und daß die Spriale (21) komplett vom Seil (6) abziehbar ist.

## Claims

1. Sawing tool for use on a belt sawing machine or the like for the machining of rock-like materials, consisting of a saw cable (1) of which the connection (4) is formed by two threads (7, 9) at the cable ends (2, 3) and a threaded sleeve (10) arranged thereon, with diamond, hard metal or ceramic coated cutting and grinding elements arranged at intervals from one another, characterised in that a longer thread (7) and a shorter thread (9) each running in the same direction are provided on the saw cable (1) for receiving the threaded or connecting sleeve (10), the separate sleeve (10) of the connection (4) being screwable almost with its entire length (l₅) onto the thread (7) of the first cable end (2) and the two cable ends (2, 3) being connected by turning the connecting sleeve (10) back from the first thread (7) of the first cable end (2), while simultaneously screwing onto the second thread (9) of the second cable end (3).

2. Sawing tool according to Claim 1, characterised in that the thread (9) of the second cable end (3) has a length (l₃) which is about half the length (l₁) of the first thread (7) of the first cable end (2).

3. Sawing tool according to Claim 1 or 2, characterised in that, to secure the connection (4), a securing element (14) such as a pin, wire, bolt, rod or the like is guided through the threaded sleeve (10), the securing element (14) coming to rest between the ends (11, 12) of the cable (6) or in that the two joinable end pieces (2, 3) have a mating tongue and groove joint (23, 24) as rotation preventing means.

4. Sawing tool according to Claim 1, 2 or 3, characterised in that the threaded sleeve (10) itself is designed as a cutting element and has a diamond coating (19) or the like.

5. Sawing tool according to one or more of the preceding Claims 1 to 5, characterised in that the diamond-coated cutting elements (15) arranged at intervals (l₇) on the cable (6) are fixed in their position rigidly on the cable (6), in that the threaded sleeve (10) and the cutting elements (15) have roughly the same external diameter (d₃) and in that, between the cutting elements (15) or the cutting elements (15) and the threaded sleeve (10) there is provided a plastics tube or covering (18) having roughly the same external diameter (d₃) as the cutting elements (15) or the threaded sleeve (10).

6. Sawing tool according to claim 5, characterised in that the plastics covering (18) initially completely surrounds the cutting elements (15) or the entire cable (6), the plastics covering (18) in the region of the cutting elements (15, 22) being removable during operation.

7. Sawing tool according to Claim 1, characterised in that the cutting or grinding elements or segments (15, 22) are designed as separate cutting sleeves (15, 16) arranged on the cable (6) or as cutting and grinding segments (22) arranged on a spiral (21) covering the cable (6) over its entire length.

8. Sawing tool according to Claim 1 or 7, characterised in that the wire spiral (21) completely surrounding the cable (6) has diamond-coated segments (22) arranged at intervals (l₇) from one another and that the spiral (21) may be removed completely from the cable (6).

## Revendications

1. Outil de sciage utilisable dans une scie à ruban ou analogue, pour usiner des matières du type roche, comportant un câble de sciage (1), dont la fermeture (4) est formée par deux filetages (7,9) aux extrémités (2,3) du câble et un manchon fileté (10) agencé sur ceux-ci, avec des éléments de coupe ou de rectification enrobés de diamant, de métal dur, ou de céramique, agencés à distance les uns des autres,
caractérisé en ce que, sur le câble de sciage (1), sont prévus un filetage plus long (7) et un filetage plus court (9), à chaque fois de même sens, pour recevoir le manchon fileté ou de fermeture (10), le manchon séparé (10) de la fermeture (4) pouvant être vissé pratiquement sur toute sa longueur (l₅) sur le filetage (7) de la première extrémité (2) du câble et la fermeture des deux extrémités (2,3) du câble étant effectuée par rotation inverse du manchon de fermeture (10) sur le premier filetage (7) de la première extrémité (2) du câble et vissage simultané sur le second filetage (9) de la seconde extrémité (3) du câble.

2. Outil de sciage selon la revendication 1,
caractérisé en ce que le filetage (9) de la seconde extrémité (3) du câble présente une longueur (l₃) qui est à peu près égale à la moitié de la longueur (l₁) du premier filetage (7) de la première extrémité (2) du câble.

3. Outil de sciage selon la revendication 1 ou 2,
caractérisé en ce que, pour garantir la fermeture (4), un élément de sécurité (14), comme une broche, un fil métallique, un boulon, une tige ou analogue, est guidé à travers le manchon fileté (10), l'élément de sécurité (14) étant disposé entre les extrémités (11,12) du câble (6), ou en ce que les deux pièces d'extrémité (2,3) pouvant être réunies présentent une liaison à languette et rainure s'engageant l'une dans l'autre (23,24) comme sécurité en torsion.

4. Outil de sciage selon la revendication 1, 2 ou 3,
caractérisé en ce que le manchon fileté (10) est réalisé lui-même en tant qu'élément de coupe et présente un revêtement de diamant (19) ou analogue.

5. Outil de sciage selon une ou plusieurs des revendications précédentes 1 à 5,
caractérisé en ce que les éléments de coupe (15), revêtus de diamant, agencés à des écartements (l₇) sur le câble (6) sont fixés solidement en position sur le câble (6), en ce que le manchon fileté (10) et les éléments de coupe (15) présentent à peu près le même diamètre externe (d₃), et en ce que, entre les éléments de coupe (15) ou les éléments de coupe (15) et le manchon fileté (10), il est prévu un tube ou enveloppe de matière synthétique (18) qui présente à peu près le même diamètre externe (d₃) que les éléments de coupe (15) ou le manchon fileté (10).

6. Outil de sciage selon la revendication 5,
caractérisé en ce que l'enveloppe de matière synthétique (18) entoure tout d'abord complètement les éléments de coupe (15) ou le câble (6) dans son ensemble, l'enveloppe de matière synthétique (18) pouvant être usée en service dans la zone des éléments de coupe (15,22).

7. Outil de sciage selon la revendication 1,
caractérisé en ce que les éléments ou segments de coupe ou de rectification (15,22) sont réalisés sous forme de manchons de coupe (15,16) séparés, agencés sur le câble (6), ou sous forme de segments de coupe ou de rectification (22), qui sont agencés sur une spirale (21) recouvrant le câble (6) sur toute sa longueur.

8. Outil de sciage selon la revendication 1 ou 7,
caractérisé en ce que la spirale de fil métallique (21) entourant complètement le câble (6) présente des segments revêtus de diamant (22), agencés à des écartements (l₇) les uns des autres, et en ce que la spirale (21) peut être retirée complètement du câble (6).
